# EUROPEAN PATENT SPECIFICATION

(11) **EP 4 110 154 B1**
(45) Date of publication and mention of the grant of the patent: **01.04.2026**
(21) Application number: 21760066.7
(22) Date of filing: 26.02.2021
(51) Int. Cl.: A47L 11/40, G01F 23/292, G01F 23/296, G01N 21/59

(54) **AI ROBOT CLEANER AND ROBOT SYSTEM HAVING THE SAME**
REINIGUNGSROBOTER UND ROBOTERSYSTEM DAMIT
ROBOT DE NETTOYAGE IA ET SYSTÈME DE ROBOT ÉQUIPÉ DE CE DERNIER

(30) Priority: 28.02.2020 KR 20200025509
(43) Date of publication of application: 04.01.2023
(73) Proprietor: LG Electronics Inc., Seoul 07336 (KR)
(72) Inventor: SHIN, Yongmin, Seoul 08592 (KR); CHO, Ilsoo, Seoul 08592 (KR)
(74) Representative: Vossius & Partner Patentanwälte Rechtsanwälte mbB
(86) International application number: PCT/KR2021/002456
(87) International publication number: WO 2021/172935

(56) References cited:
- CN-A- 110 367 885
- CN-A- 110 495 821
- CN-U- 209 331 935
- KR-A- 20180 087 778
- KR-A- 20190 015 930
- KR-B1- 102 054 689
- US-A1- 2014 366 292
- US-A1- 2019 038 105
- US-A1- 2022 338 699

## Description

### Technical Field

The present disclosure relates to a method of controlling a robot cleaner, and more particularly, to a method of controlling an artificial intelligent robot cleaner using a rotary mop.

### Background Art

US 2019/038105 A1 relates to a robot cleaner including a controller which measures a slip rate based on an actual speed of a main body measured by a motion detection unit in a reference motion and an ideal speed of the main body estimated according to driving of a drive motor, and controls an amount of water supplied to a rotation mop.

CN 110495821A and US 2022/338699 A1 relate to a cleaning robot including: a chassis; a fluid applicator, carried on the chassis and configured to distribute a cleaning fluid on at least part of a cleaning width; a fluid storage apparatus, detachably connected to the chassis, wherein the fluid storage apparatus is in communication with the fluid applicator and configured to apply the cleaning fluid distributed by the fluid applicator to a floor; and a control unit, carried on the chassis and configured to control the fluid applicator to stop distributing the cleaning fluid in a case that a to-be-cleaned area of the floor reaches a preset value.

US 2014/366292 A1 relates to a robot cleaner configured to judge whether or not water is received in the robot cleaner performing wet cleaning.

KR 102 054 689 B1 relates to a robot cleaner that can accurately measure an amount of water absorbed in a cleaning tool by measuring an amount of water of the cleaning tool installed in the robot cleaner based on capacitance.

KR 2018 0087778 A relates to a robot cleaner comprising a main body; a plurality of spin mop assemblies disposed at a lower portion of the main body and configured to include at least one mop pad attached at lower portions of the plurality of spin mop assemblies; a driving assembly configured to drive the plurality of spin mop assemblies; a first supply assembly configured to store a first liquid inside the main body and supply the first liquid to at least one mop pad of some of the plurality of spin mop assemblies by adjusting a first valve; and a second supply assembly configured to store a second liquid inside the main body and supply the second liquid to at least one mop pad of the others of the plurality of spin mop assemblies by adjusting a second valve.

In recent years, the use of robots in homes has been gradually expanding. A representative example of the robot for home use is a cleaning robot. The cleaning robot is a mobile robot capable of automatically cleaning a cleaning space by traveling on a certain region by itself and sucking foreign substances such as dust accumulated on a floor, or wiping the floor with a rotary mop while moving by using the rotary mop. In addition, it is possible to clean a floor by damp-wiping the floor by supplying water to the rotary mop.

However, when the water supplied to the rotary mop is not properly adjusted, there is a problem in that a floor, which is a cleaning target, cannot be cleaned appropriately, as if excessive water remains on the floor or the floor is wiped with a dry mop. Korean Patent Laid-Open Publication No. 1020040052094 discloses a cleaning robot capable of cleaning with water that includes a mop roller equipped with a mop cloth on its outer circumference to wipe off the steam sprayed on the floor with dust. The cleaning robot sprays steam onto the surface of a cleaning floor for wet cleaning, and includes a mop cloth to wipe off the sprayed steam and dust. In addition, Korean Patent Laid-Open Publication No. 20140146702 discloses a robot cleaner and a control method for determining whether water can be accommodated inside the robot cleaner capable of wet cleaning.

However, at present, it is disclosed that the cleaning is stopped depending on the state of a water tank by detecting the state of the water tank of the wet mop cleaner and transmitting the detection information to a main module. However, a wet mop cleaner for which scheduled cleaning is set has to proceed with cleaning at a scheduled time, but if the cleaning cannot be proceeded with depending on the state of the water tank, a scheduling error occurs.

Meanwhile, in some cases, it is required to proceed with cleaning with a dry mop.

To this end, wet mop cleaners that are commercially available in recent years are capable of selectively changing a wet mop mode or a dry mop mode according to the selection of a user. However, the wet mop cleaner has a disadvantage in that the user has to proceed with cleaning by manually changing the modes according to the floor condition at that point of time.

### [Prior Art Documents]

### [Patent Documents]

Korean Patent Laid-Open Publication No. 1020040052094 (published on June 19, 2004)
Korean Patent Laid-Open Publication No. 20140146702 (published on December 29, 2014)

### Disclosure of Invention

### Technical Problem

An object to be achieved by the present disclosure is to provide a method for controlling a robot cleaner that includes a sensor in a water tank and that is capable of detecting a water shortage in the water tank for supplying water to a rotary mop and changing modes accordingly.

Another object to be achieved by the present disclosure is to provide a method for controlling a robot cleaner capable of determining a water shortage by sensing an output current of a motor of a rotary mop of the robot cleaner and changing modes.

Yet another object to be achieved by the present disclosure is to provide a method for controlling a robot cleaner capable of keeping cleaning by automatically converting to a dry mop mode or to a wet mop mode according to water shortage information of the water tank.

The present disclosure is not limited to the above-mentioned objects, and other objects not mentioned will be apparent to those skilled in the art upon reading the following description.

### Solution to Problem

According to an aspect of the present disclosure, a robot cleaner includes a main body forming an outer shape, a water tank including a water level sensor and storing water, a pair of rotary mops to which a cleaning cloth is attached, and that moves the main body while rotating in contact with a floor, a drive motor rotating the pair of rotary mops, a nozzle supplying water from the water tank to the cleaning cloth of the rotary mop, and a controller periodically determining an abnormality in water supply to convert to a wet mop mode or to a dry mop mode to proceed with cleaning, and wherein the controller is further configured to calculate a percentage of water content of the cleaning cloth from the output current of the drive motor, and to determine that the water supply is abnormal, when the percentage of water content is equal to or less than a predetermined value, and to further determine whether the specific cause of the water supply abnormality is a nozzle driving abnormality or water shortage based on a water level value from the water level sensor.

The controller may stop driving of the nozzle to operate in the dry mop mode.

The water tank may have the water level sensor for detecting a level of water in the water tank disposed on a wall surface.

The controller may periodically receive a detection signal from the water level sensor, and may determine whether water is insufficient according to the detection signal to perform switching to the wet mop mode or the dry mop mode.

The controller may determine whether to automatically switch from the wet mop mode to the dry mop mode when water supply is abnormal according to a setting value.

The controller may switch from the wet mop mode to the dry mop mode according to the setting value when a water level value from the detection signal of the water level sensor is equal to or less than a threshold value.

The robot cleaner may stop the wet mop mode and return to a station according to the setting value when a water level value from the detection signal of the water level sensor is equal to or less than a threshold value.

The controller may read a percentage of water content of a previous period when the percentage of water content is equal to or less than a predetermined value, and may determine that the water supply is abnormal when the percentage of water content of a current period is less than the percentage of water content of the previous period.

The controller may switch from the wet mop mode to the dry mop mode according to the setting value when it is determined that the water supply is abnormal.

The water level sensor may include a light emitter provided on an outer wall of the water tank and a light receiver facing the light emitter and provided on the outer wall of the water tank.

The controller may read a water level value of the water tank before moving and may determine whether to operate in the wet mop mode, when receiving cleaning start information.

According to another aspect of the present disclosure, a robot system includes a robot cleaner for performing wet cleaning in a cleaning area, a server transmitting and receiving to and from the robot cleaner to perform control of the robot cleaner, and a user terminal that is linked to the robot cleaner and the server and activates an application for control of the robot cleaner to perform control of the robot cleaner, in which the robot cleaner includes a main body forming an outer shape, a water tank including a water level sensor and storing water, a pair of rotary mops to which a cleaning cloth is attached, and that moves the main body while rotating in contact with a floor, a drive motor rotating the pair of rotary mops, a nozzle supplying water from the water tank to the cleaning cloth of the rotary mop, and a controller periodically determining an abnormality in water supply to convert to a wet mop mode or to a dry mop mode to proceed with cleaning, and wherein the controller is further configured to calculate a percentage of water content of the cleaning cloth from the output current of the drive motor, and to determine that the water supply is abnormal, when the percentage of water content is equal to or less than a predetermined value, and to further determine whether the specific cause of the water supply abnormality is a nozzle driving abnormality or water shortage based on a water level value from the water level sensor.

The water tank may include the water level sensor for detecting a level of water in the water tank on a wall surface.

The controller may periodically receive a detection signal from the water level sensor, and may determine whether water is insufficient according to the detection signal to perform switching to the wet mop mode or the dry mop mode.

A setting value for mode changing may be received from the user terminal, and the controller may determine whether to automatically switch from the wet mop mode to the dry mop mode when water supply is abnormal according to the setting value.

The robot cleaner may switch from the wet mop mode to the dry mop mode, or stop the wet mop mode and return to a station, according to the setting value, when a water level value from the detection signal of the water level sensor is equal to or less than a threshold value.

The controller may read a percentage of water content of a previous period when the moisture content is equal to or less than a predetermined value, and may determine that the water supply is abnormal when the percentage of water content of a current period is less than the percentage of water content of the previous period.

The controller may automatically switch from the wet mop mode to the dry mop mode according to the setting value and may transmit the switching information to the user terminal, when it is determined that the water supply is abnormal.

The effects of the present disclosure are not limited to the above-mentioned effects, and other effects that are not mentioned will be apparent to those skilled in the art upon reading the claims.

### Advantageous Effects of Invention

With the robot cleaner of the present disclosure, one or more of the following effects are provided.

In the present disclosure, a sensor is provided in the water tank to detect the water shortage in the water tank for supplying water to the rotary mop, thereby determining whether to change modes by the robot cleaner itself.

In addition, the mode may be automatically changed between the wet mop mode and the dry mop mode by sensing the output current of the motor of the rotary mop of the robot cleaner to determine the water shortage, thereby making it possible to maintain cleaning continuity.

Furthermore, in the present disclosure, when converting to the dry mop mode or to the wet mop mode according to the water shortage information of the water tank, determination as to whether to convert or return the mode may be made according to setting of the user, thereby making it possible to change the mode in accordance with the intention of a user.

The effects of the present disclosure are not limited to the above-mentioned effects, and other effects that are not mentioned will be apparent to those skilled in the art upon reading the claims.

### Brief Description of Drawings

FIG. 1 is a constitutional view of a smart home system including a robot cleaner according to an embodiment of the present disclosure.
FIG. 2 is a perspective view of a robot cleaner according to an embodiment of the present disclosure.
FIG. 3 is a bottom view of a robot cleaner according to an embodiment of the present disclosure.
FIG. 4 is another state diagram of the bottom view of the robot cleaner according to the embodiment of the present disclosure.
FIG. 5 illustrates a sensor provided in a water tank of a robot cleaner according to an embodiment of the present disclosure.
FIG. 6 is a block diagram illustrating a controller and a configuration related to the controller of a robot cleaner according to an embodiment of the present disclosure.
FIGS. 7a to 7c are views for describing rotation of a rotary mop when a robot cleaner according to an embodiment of the present disclosure moves.
FIG. 8 is a flowchart showing the overall operation of the robot cleaner system according to FIG. 1 according to the present disclosure.
FIG. 9 is a flowchart showing a control method according to the state of the water tank of the robot cleaner of FIG. 8.
FIG. 10 is a flowchart showing a first embodiment in which the control method of FIG. 9 is embodied.
FIG. 11 is a flowchart showing a second embodiment in which the control method of FIG. 9 is embodied.

### Mode for the Invention

Although expressions designating directions such as "front (F)/rear (R)/left (Le)/right (Ri)/up (U)/ down (D)" to be mentioned below are defined as indicated in the drawings, these are simply given to explain the present disclosure for clear understanding, and it is obvious that the respective directions may be defined in different ways depending on the reference point.

The use of terms with the expression 'first, second, etc.' in front of the elements mentioned below is only used to avoid confusion of the elements, and is not related to the order, importance, or master/slave relationships between elements, or the like. For example, an invention including only a second element without a first element can be implemented.

In the drawings, the thickness or size of each element is exaggerated, omitted, or schematically illustrated for convenience and clarity of description. Furthermore, the size and area of each element do not fully reflect the actual size or area.

In addition, angles and directions mentioned in the process of describing a structure of the present disclosure are based on those described in the drawings. In the description of the structure in the specification, when the reference point and the positional relationship with respect to the angle are not clearly mentioned, reference will be made to the related drawings.

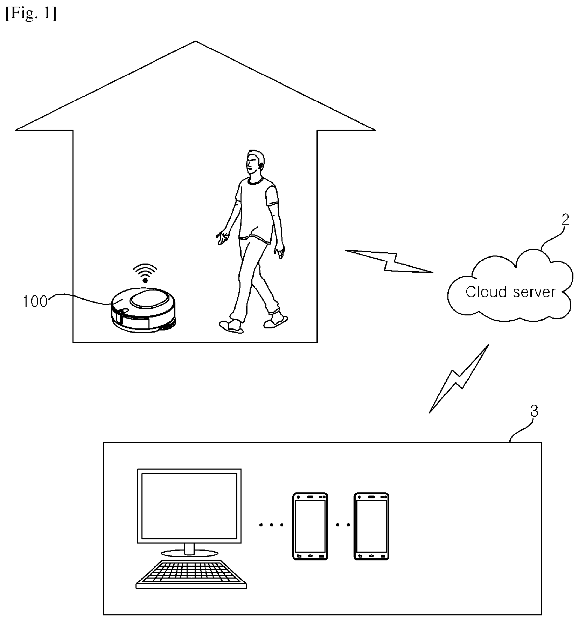

FIG. 1 is a constitutional view of an artificial intelligence robot system according to an embodiment of the present disclosure.

Referring to FIG. 1, the robot system according to an embodiment of the present disclosure may include one or more robot cleaners 100 to provide a service at a prescribed place such as a house. For example, the robot system may include the robot cleaner 100 providing a cleaning service for a designated place in a house or the like. In particular, the robot cleaner 100 may provide a dry, wet, or dry/wet cleaning service depending on functional blocks it includes.

Preferably, the robot system according to an embodiment of the present disclosure may include a plurality of artificial intelligence robot cleaners 100 and a server 2 capable of managing and controlling the plurality of artificial intelligence robot cleaners 100.

The server 2 may remotely monitor and control the state of the plurality of robot cleaners 100, and the robot system may provide more effective services by using the plurality of robot cleaners 100.

The plurality of robot cleaners 100 and the server 2 may include a communication unit (not shown) that supports one or more communication standards to communicate with each other. In addition, the plurality of robot cleaners 100 and the server 2 may communicate with a PC, a mobile terminal, and another external server 2.

For example, the plurality of robot cleaners 100 and the server 2 may implement wireless communication using wireless communication technologies such as IEEE 802.11 WLAN, IEEE 802.15 WPAN, UWB, Wi-Fi, Zigbee, Z-wave, Blue-Tooth, or the like. The robot cleaners 100 may be established differently depending on the type of communication of other devices the robot cleaners 100 intend to communication with or server 2.

In particular, the plurality of robot cleaners 100 may implement wireless communication with other robot cleaners 100 and/or servers 2 over a 5G network. When the robot cleaners 100 performs wireless communication over the 5G network, real-time response and real-time control are possible.

The user may check information on the robot cleaners 100 in the robot system through a user terminal 3 such as a PC or a mobile terminal.

The server 2 may be implemented as a cloud server 2, and the cloud server 2 may be linked to the robot cleaners 100 to monitor and control the robot cleaners 100 and remotely provide various solutions and contents.

The server 2 may store and manage information received from the robot cleaners 100 and other devices. The server 2 may be a server 2 provided by a manufacturer of the robot cleaners 100 or a company entrusted with a service by the manufacturer. The server 2 may be a control server 2 that manages and controls the robot cleaners 100.

The server 2 may control the robot cleaners 100 collectively and the same way, or may control the robot cleaners 100 individually. Meanwhile, the server 2 may be implemented as multiple servers in which information and functions are distributed, or may be implemented as a single integrated server.

The robot cleaners 100 and the server 2 may include a communication unit (not shown) that supports one or more communication standards to communicate with each other.

The robot cleaners 100 may transmit data related to space, objects, and usage to the server 2.

Here, the data related to space and objects may be data related to recognition of space and objects recognized by the robot cleaners 100, and may be image data on space and objects acquired by an image acquisition unit.

According to an embodiment, the robot cleaner 100 and the server 2 may include artificial neural networks (ANNs) in the form of software or hardware that have been trained to recognize at least one of properties of an object such as a user, a voice, a space attribute, an obstacle, and the like.

According to an embodiment of the present disclosure, the robot cleaner 100 and the server 2 may include a deep neural network (DNN) such as a convolutional neural network (CNN), a recurrent neural network (RNN), a deep belief network (DBN), which have been trained by machine learning and deep learning. For example, a structure of the deep neural network (DNN), such as the convolutional neural network (CNN), may be mounted in a controller 150 of the robot cleaner 100.

The server 2 may train the deep neural network (DNN) based on data received from the robot cleaners 100, data input by the user, or the like, and then may transmit the updated deep neural network (DNN) structure data to the robots 1. Accordingly, the structure of the artificial intelligence deep neural network (DNN) provided in the robot 100 may be updated.

In addition, usage-related data may be data acquired by using the robot cleaner 100, and may correspond to usage history data, a detection signal acquired from a sensor, and the like.

The structure of the trained deep neural network (DNN) may receive input data for recognition, recognize attributes of people, objects, and spaces included in the input data, and output the result.

In addition, the structure of the trained deep neural network structure (DNN) may receive input data for recognition, and analyze and learn the usage-related data of the robot cleaner 100 to recognize usage patterns, usage environments, and the like.

Meanwhile, data related to space, objects, and usage may be transmitted to the server 2 through a communication unit.

The server 2 may train the deep neural network (DNN) based on the received data, and then transmit the updated data of the structure of the deep neural network (DNN) to the artificial intelligence robot cleaner 100 for updating.

Accordingly, the robot cleaner 100 becomes more and more smart, and may provide a user experience (UX) that evolves as it is used.

Meanwhile, the server 2 may provide information on the control and current state of the robot cleaner 100 to the user terminal, and may generate and distribute an application for controlling the robot cleaner 100.

The application may be a PC application applied as the user terminal 3, or may be an application for smartphones.

For example, it may be an application for controlling smart home appliances such as the SmartThinQ application, which is an application capable of simultaneously controlling and managing and managing various electronic products of the applicant.

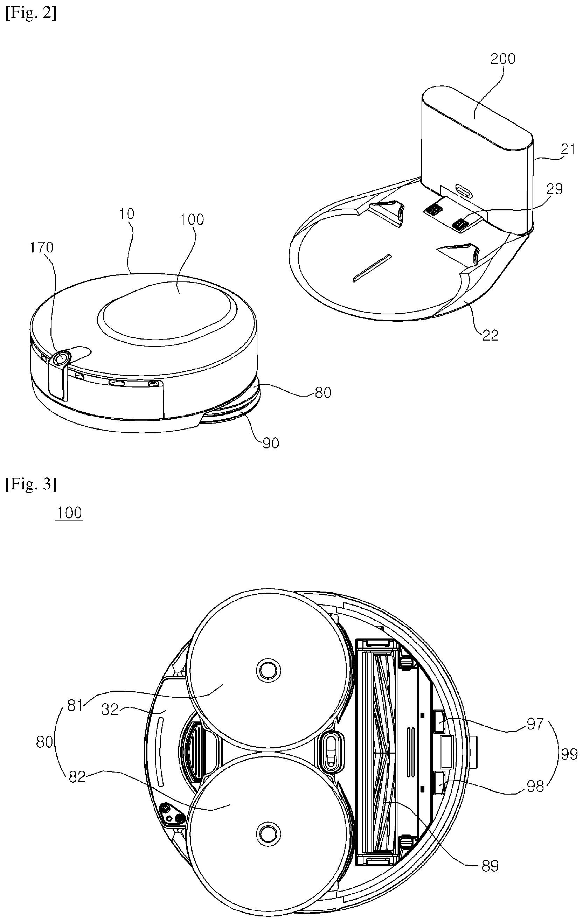

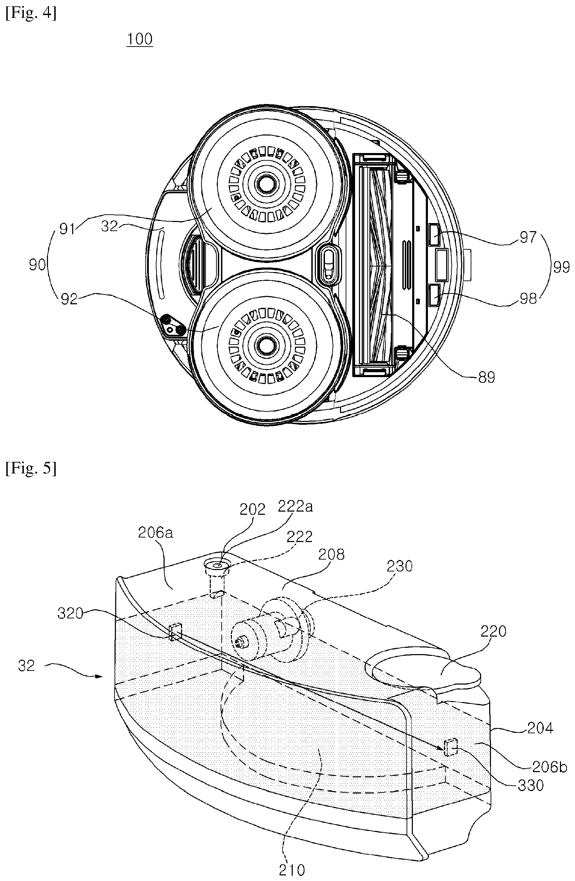

FIG. 2 is a perspective view of a robot cleaner according to an embodiment of the present disclosure, FIG. 3 is a bottom view of a robot cleaner according to an embodiment of the present disclosure, and FIG. 4 is another state diagram of the bottom view of the robot cleaner according to the embodiment of the present disclosure.

Referring to FIGS. 2 to 4, the configuration of the robot cleaner 100 in motion by the rotation of the rotary mop according to the present embodiment will be briefly described.

The robot cleaner 100 according to an embodiment of the present disclosure moves within a region and removes foreign matter from the floor surface while traveling.

In addition, the robot cleaner 100 travels in the region by storing charging power supplied from a charging stand 200 in a battery (not shown).

The robot cleaner 100 includes a main body 10 performing a designated operation, an obstacle detection unit (not shown) disposed on the front of the main body 10 to detect an obstacle, and an image acquisition unit 170 capturing a 360-degree image. The main body 10 includes a casing (not shown) that forms an outer shape and forms a space in which components constituting the main body 10 are accommodated, a rotary mop 80 which is rotatably provided, a roller 89 which assists movement of the main body 10 and the cleaning, and a charging terminal 99 to which charging power is supplied from the charging stand 200.

The rotary mop 80 is disposed in the casing and formed toward the floor surface and configured to allow the cleaning cloth to be detachable.

The rotary mop 80 includes a first rotating plate 81 and a second rotating plate 82 to allow the main body 10 to move along the floor of the region through rotation.

When the rotary mop 80 used in the robot cleaner 100 of the present embodiment rotates, a slip occurs such that the robot cleaner 100 does not move in comparison with the actual rotation of the rotary mop. The rotary mop may include a rolling mop driven by a rotation axis parallel to the floor, or a rotary mop driven by a rotation axis almost perpendicular to the floor.

When the rotary mop 80 includes the rotary mop, the output current value of a drive motor for rotating the rotary mop may vary depending on a percentage of water content which is a ratio of contained water. The percentage of water content means the degree to which the rotary mop contains water, and a state in which the percentage of water content is "0" means a state in which no water is contained in the spin mop. The percentage of water content according to the present embodiment may be set to a ratio of contained water to the weight of the mop cloth. The rotary mop may contain water having the same weight as that of the mop, or may contain water in excess of the weight of the cleaning cloth.

The more water the rotary mop 80 contains, the higher the percentage of water content becomes, and the frictional force with the floor surface becomes greater due to the influence of water, thereby reducing the rotation speed.

The decrease in the rotation speed of the drive motor 38 means the increase in the torque of the drive motor 38, and accordingly, the output current of the drive motor 38 for rotating the rotary mop is increased.

That is, a relationship is established that the output current of the drive motor 38 for rotating the rotary mop is increased by the frictional force that is increased as the percentage of water content is increased.

In addition, the controller 150 may transmit various information by varying the output current of the drive motor 38 for a predetermined time. This will be described later.

The robot cleaner 100 according to the present disclosure may further include a water tank 32 disposed inside the main body 10 to store water, a pump 34 for supplying water stored in the water tank 32 to the rotary mop 80, and a connection hose for forming a connection flow path connecting the pump 34 and the water tank 32, or connecting the pump 34 and the rotary mop 80.

The robot cleaner 100 according to the present embodiment includes a pair of rotary mops 80, and moves by rotating the pair of rotary mops 80.

The main body 10 travels forward, backward, right and left as the first rotating plate 81 and the second rotating plate 82 of the rotary mop 80 rotate around a rotating shaft. In addition, as the first and second rotating plates 81 and 82 rotate, the main body 10 performs wet cleaning by removing foreign substances from the floor surface by the attached cleaning cloth.

The main body 10 may include a driving unit (not shown) for driving the first rotating plate 81 and the second rotating plate 82. The driving unit may include at least one drive motor 38.

On the upper surface of the main body 10, a control panel may be provided including an operation unit (not shown) receiving various commands for controlling the robot cleaner 100 from a user.

In addition, the image acquisition unit 170 is disposed on the front or upper surface of the main body 10.

The image acquisition unit 170 captures an image of an indoor region. Based on the image captured by the image acquisition unit 170, it is possible to detect obstacles the main body as well as to monitor the indoor region.

The image acquisition unit 170 may be disposed toward the front and upper direction at a predetermined angle to photograph the front and the upper side of the moving robot. The image acquisition unit 170 may further include a separate camera for photographing the front side. The image acquisition unit 170 may be disposed at the upper portion of the main body 10 to face the ceiling, and in some cases, a plurality of cameras may be provided. In addition, the image acquisition unit 170 may be separately provided with a camera that photographs the floor surface.

The robot cleaner 100 may further include a position obtaining means (not shown) for obtaining the current position information. The robot cleaner 100 may include GPS and UWB to determine the current position. In addition, the robot cleaner 100 may determine the current position by using an image.

The main body 10 includes a rechargeable battery (not shown), and a charging terminal 99 of the battery may be connected to a commercial power source (e.g., a power outlet in a house) or the main body 10 may be docked to the charging stand 200 connected to the commercial power source such that the charging terminal is electrically connected to the commercial power source through contact with a terminal 29 of the charging stand, and in this way, the battery may be charged by the charging power supplied to the main body 10.

The electronic components constituting the robot cleaner 100 may be supplied with power from a battery, and thus, the robot cleaner 100 having the battery charged may automatically move in a state in which the robot cleaner 100 is electrically separated from commercial power.

Hereinafter, the robot cleaner 100 will be described as being a wet cleaning robot by way of example; however, the robot cleaner 100 is not limited thereto and it should be noted that any robot that detects sound while autonomously traveling in a region is applicable.

FIG. 4 is a diagram illustrating an embodiment in which a mop cloth is attached to the moving robot of FIG. 2.

As illustrated in FIG. 4, the rotary mop 80 includes the first rotating plate 81 and the second rotating plate 82.

The first rotating plate 81 and the second rotating plate 82 may be provided with attached cleaning cloths 91 and 92 (90), respectively.

The rotary mop 80 is configured such that cleaning cloths are detachable. The rotary mop 80 may include mounting members for attachment of the cleaning cloths on the first rotating plate 81 and the second rotating plate 82, respectively. For example, the rotary mop 80 may be provided with a Velcro, a fitting member, or the like so that the cleaning cloths is attached and fixed. In addition, the rotary mop 80 may further include cleaning cloth frames (not shown) as separate auxiliary means for fixing the cleaning cloths to the first rotating plate 81 and the second rotating plate 82.

The cleaning cloth 90 absorbs water and removes foreign matter through friction with the floor surface. The cleaning cloth 90 is preferably made of a material such as cotton fabric or cotton blend, but any material containing moisture in a certain ratio or higher and having a predetermined density may be used, and the material is not limited.

The cleaning cloth 90 is formed in a circular shape.

The shape of the cleaning cloth 90 is not limited to the drawing and may be formed in a quadrangular shape, a polygonal shape, or the like; however, considering the rotational motion of the first and second rotating plates 81 and 82, the first and second rotating plates 81 and 82 are preferably configured in a shape that does not interfere with the rotational motion. In addition, the shape of the cleaning cloth 90 may be changed to a circular shape by the cleaning cloth frame provided separately.

The rotary mop 80 is configured such that when the cleaning cloth 90 is mounted, the cleaning cloth 90 comes into contact with the floor surface. Considering the thickness of the cleaning cloth 90, the rotary mop 80 is configured to change a separation distance between a casing and the first and second rotating plates 81 and 82 with the thickness of the cleaning cloth 90.

The rotary mop 80 may adjust the separation distance between the casing and the rotating plates 81 and 82 so that the cleaning cloth 90 and the floor surface comes into contact with each other, and may further include a member for generating pressure on the first and second rotating plates 81 and 82 against the floor surface.

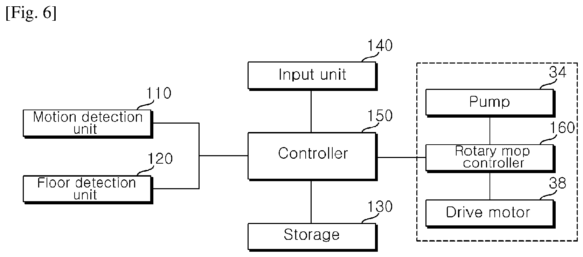

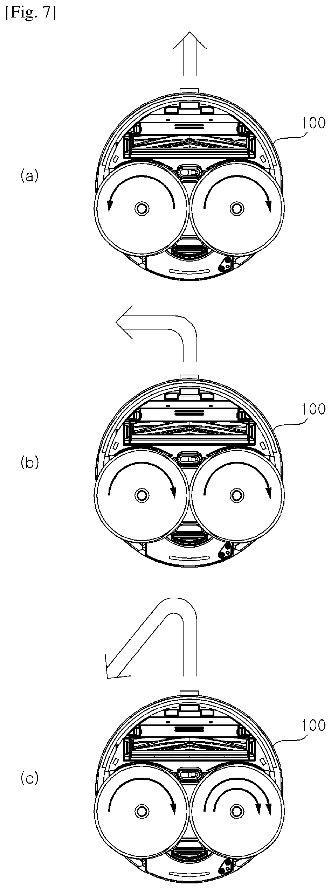

FIG. 5 illustrates a sensor provided in a water tank 32 provided in a robot cleaner according to an embodiment of the present disclosure, FIG. 6 is a block diagram illustrating a controller and a configuration related to the controller of a robot cleaner according to an embodiment of the present disclosure, and FIGS. 7a to 7c are views for describing rotation of a rotary mop when a robot cleaner according to an embodiment of the present disclosure moves.

Referring to FIG. 5, the water tank 32 of the robot cleaner 100 according to an embodiment of the present disclosure includes a water container case 202 in which a space for storing water is formed, an opening cover 220 for opening and closing an opening (not shown) formed on the upper side of the water container case 202, and a discharge nozzle unit 230 that is connected to a supply nozzle unit when the water tank 32 is mounted on the main body 10.

The water container case 202 has a shape corresponding to the mounting space of the water tank formed in the main body 10. Accordingly, the water container case 202 may be inserted into or withdrawn into or from a mounting space formed by the main body 10.

The water container case 202 may include a case front surface 204 facing the main body 10 when the water tank 32 is mounted on the main body 10, both case side surfaces 206 facing both side surfaces of the main body 10, a case upper surface 208, a case lower surface 210, and a case rear surface 212 disposed rearward and exposed to the outside.

On the upper side of the water container case 202, an opening (not shown) opened to supply water to the inner space of the water container case 202 is formed, and at the opening, an opening cover 220 for opening and closing the opening is disposed. The opening is formed on the case upper surface 208, and the opening cover 220 is disposed on the case upper surface 208 in which the opening is formed.

On the upper side of the water container case 202, an air passage 222a for communicating the inside and the outside of the water tank 32 is formed. The air passage 222a may be formed in a separate passage member 222 mounted on the upper side of the water container case 202.

The air passage 222a is formed on the case upper surface 208. When the water tank 32 is mounted on the water container housing 100, the case upper surface 208 may be spaced apart from the upper surface of the water container housing at a certain interval. Therefore, in the state where the water tank 32 is mounted on the water container housing 100, even if the water inside the water tank 32 escapes to the outside of the water tank 32 through the discharge nozzle unit 230, outside air may be introduced into the water tank 32 through the air passage 222a.

The discharge nozzle unit 230 is disposed on the case front surface 204. The discharge nozzle unit 230 may be disposed in a direction skewed to the left or right from the case front surface 204. The discharge nozzle unit 230 according to the present embodiment is disposed to be skewed to the left from the case front surface 204.

A plurality of sensors may be provided in such a water tank 32.

Specifically, the plurality of sensors may include water level sensors 320 and 330.

When the water level sensors 320 and 330 are disposed in the water tank 32, the level sensors may be contact type or a non-contact type level sensors, but in the present disclosure, they may be non-contact type level sensors.

As the non-contact type level sensor, an ultrasonic level sensor may be mainly used, and a method for measuring the level is a method for continuously measuring a liquid surface, where the ultrasonic level sensor uses ultrasonic waves to detect a level. The water level sensors 320 and 330 may include a transmitter 320 that emits an ultrasonic pulse and a receiver 330 that is disposed opposite to the transmitter 320 and receives the emitted ultrasonic waves.

The transmitter 320 and the receiver 330 may be disposed to face each other on the outer surface 206 of the water tank 32 as illustrated in FIG. 5.

Meanwhile, the plurality of sensors may further include a turbidity sensor in addition to the water level sensors.

The turbidity sensor may be disposed on the surface of the water tank 32, and may be disposed on the outer wall when the wall of the water tank 32 is formed of a light-transmitting material. In an example, the turbidity sensor may be disposed on both case side surfaces 206a and 206b facing each other.

For the turbidity sensor disposed on the outer surface of the water tank 32, it may be formed to include a light emitter and light receiver, and when a measurement method by the turbidity sensor is a method for measuring transmitted light, where the light emitter is disposed on one side of the water tank 32, and when light is emitted by the light emitter, the amount of light passing through the water tank 32 is measured. Accordingly, the light receiver may be disposed opposite the water tank 32 corresponding to the light emitter, and at this time, the receiver 330 of the water level sensors 320 and 330 and the light receiver of the turbidity sensor may be formed as one module.

In this way, the receiver 330 of the water level sensors 320 and 330 converts the received light or ultrasonic wave into an electric signal and transmits the converted electric signal to a rotary mop controller 160 as a detection signal.

The transmission of the detection signal is possible by wire or wireless.

On the other hand, as illustrated in FIG. 6, the robot cleaner 100 according to the present embodiment further includes a motion detection unit 110 that detects the motion of the robot cleaner 100 according to a reference motion of the main body 10 when the rotary mop 80 rotates. The motion detection unit 110 may further include a gyro sensor for detecting a rotation speed of the robot cleaner 100 or an acceleration sensor for detecting an acceleration value of the robot cleaner 100. In addition, the motion detection unit 110 may use an encoder (not shown) that detects the moving distance of the robot cleaner 100.

The robot cleaner 100 according to the present embodiment may include the rotary mop controller 160 that provides power to the drive motor 38 for rotating and controlling the rotary mop, and reads the output current of the drive motor 38 and transmits it to the controller 150.

The rotary mop controller 160 may be formed in a separate chip in which simple logic is implemented and may be disposed in a rotary mop module including a drive motor 38 and a nozzle and the pump 34.

The rotary mop controller 160 transmits a current for rotating the drive motor 38 by a start signal of the controller 150, and reads the output current of the drive motor 38 at a set period and transmit it to the controller 150.

The controller 150 reads detection information from the plurality of sensors provided in the water tank 32 and reads the output current from the rotary mop controller 160, and determines whether the water supply is abnormal, including the current state of the water tank.

Specifically, the controller 150 receives the water level detection signal and determine the signal to determine whether there is an abnormality in water supply.

In addition, the controller 150 receives the output current of the drive motor 38 from the rotary mop controller 160 and analyzes it to determine the current water supply state of the nozzle from the percentage of water content of the mop cloth 90 of the rotary mop 80.

That is, the controller 150 may determine the water supply state of the robot cleaner 100 and the water level state of the water tank 32 based on the information on the output current of the drive motor 38, and may alarm the user.

Specifically, the controller 150 analyzes the waveform of the received output current of the drive motor 38, and determines the percentage of water content of the mop cloth 90 of the rotary mop 80 based on the corresponding waveform. When the percentage of water content is small, the frictional force is increased, and accordingly, a large torque is applied to the rotation of the rotary mop 80, which may lead to increase in the output current.

In addition, it is possible to determine whether water is insufficient by reading the water level value of the water tank 32 from a detection signal of the water level sensors 320 and 330.

The determination of the abnormality in water supply may be made from the output current of the drive motor 38 or from the detection signal of the water level sensors 320 and 330, and both methods may be applied.

At this time, when it is determined that there is an abnormality in water supply according to the determination result, the controller 150 may stop the wet mop mode and perform switching to the dry mop mode. Such a mode switching may be performed by referring to a user setting value received by the robot cleaner 100.

The user setting value may be stored in a storage 130, but is not limited thereto.

The controller 150 may call the user's attention by alarming the user terminal 3 or the like for the abnormality.

Meanwhile, the robot cleaner 100 may further include a floor detection unit including a cliff sensor that detects the presence of a cliff exists on the floor in the cleaning region. The cliff sensor according to the present embodiment may be disposed in the front portion of the robot cleaner 100. In addition, the cliff sensor according to the present embodiment may be disposed on one side of a bumper.

When a cliff sensor is included, the controller 150 may determine the material of the floor based on the amount of light received by the light receiving element in the light emitted by the light emitting element and reflected from the floor, and is not limited thereto.

The robot cleaner 100 according to the present embodiment may determine whether water is insufficient in the water tank 32 in the current period and the nozzle has a water spray error by reading the output current value of the drive motor 38 or determining the water supply error through the detection value of the water level sensor.

Each data value for such an output current value may be set in advance and may be shared between the rotary mop controller 160 and the controller 150.

The robot cleaner 100 according to the present embodiment may further include an input unit 140 for inputting commands of the user. The user may set a traveling method of the robot cleaner 100 or an operation of the rotary mop 80 through the input unit 140.

In addition, the robot cleaner 100 may further include a communication unit, and may provide an alarm or information according to a determination result of the controller 150 to the server 2 or the user terminal 3 through the communication unit.

FIG. 7 is a diagram for describing the motion of the robot cleaner 100 according to an embodiment of the present disclosure, and referring to FIG. 7, the traveling of the robot cleaner 100 and the movement of robot cleaner 100 with the rotation of the rotary mop will be described.

The robot cleaner 100 according to the present embodiment includes a pair of rotary mops, and moves by rotating the pair of rotary mops. The robot cleaner 100 may control the traveling of the robot cleaner 100 by varying the rotation direction or rotation speed of each of the pair of rotary mops. Therefore, pattern traveling is possible through such control.

Referring to FIG. 7a, the robot cleaner 100 may move in a straight direction by rotating each of the pair of rotary mops in opposite directions. In this case, the rotation speed of each of the pair of rotary mops is the same, but the rotation direction is different. The robot cleaner 100 may perform forward movement or backward movement by changing the rotation direction of both rotary mops.

In addition, referring to FIGS. 7b and 7c, the robot cleaner 100 may rotate by rotating each of the pair of rotary mops in the same direction. The robot cleaner 100 may rotate in place by varying the rotational speed of each of the pair of rotary mops, or may perform a round rotation moving in a curve. By varying the rotation speed ratio of each of the pair of rotary mops of the robot cleaner 100, the radius of the round rotation may be adjusted.

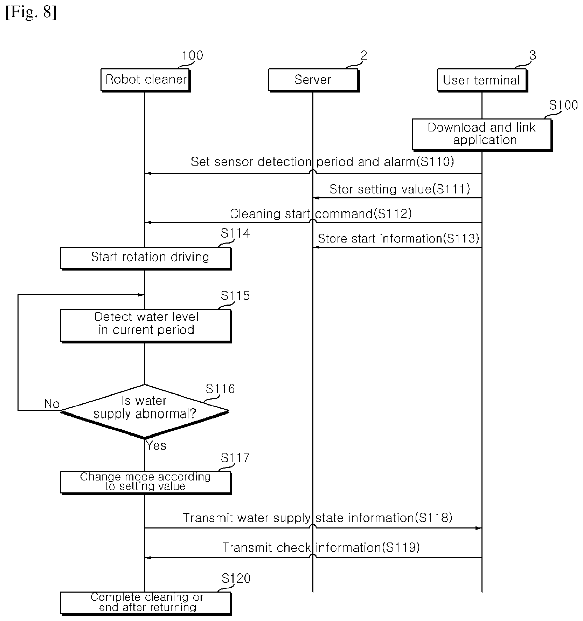

Hereinafter, a method for controlling a robot cleaner according to the present embodiment will be described with reference to FIGS. 8 to 11.

FIG. 8 is a flowchart showing the overall operation of the robot cleaner system according to FIG. 1 according to the present disclosure.

Referring to FIG. 8, in the robot system including the robot cleaner 100 according to an embodiment of the present disclosure, the robot cleaner 100, the server 2 and the user terminal 3 communicate wirelessly with each other to perform control of the robot cleaner 100.

First, the server 2 of the robot system produces a user application capable of controlling the robot cleaner 100 and holds it in a state that can be distributed online.

The user terminal 3 downloads and installs a user application online (S100).

By executing the user application to register as a member and register the robot cleaner 100 owned by the user in the application, the robot cleaner 100 and the application are linked.

The user terminal 3 may set various functions for the robot cleaner 100, and specifically, may set the cleaning period and the period for checking water supply, and a method for alarming a result of checking according to such a period, or the like (S110).

In addition, such a function setting value may include whether to automatically switch from the wet mop mode to the dry mop mode when there is an abnormality in water supply.

At this time, the wet mop mode is defined as a mode in which cleaning is proceeded with while supplying water to the mop cloth 90 of the rotary mop 80 by driving both the nozzle and the drive motor 38.

In this case, the dry mop mode is defined as a mode in which cleaning is proceeded with in a state of not supplying water to the mop cloth 90 of the rotary mop 80 by driving only the drive motor 38 without driving the nozzle.

A water supply check period may be preferably 1 to 10 minutes, more preferably 1 to 6 minutes.

As the alarm method, a sound alarm and a display alarm may be selected, and alarm period may also be set.

In addition, in addition to displaying the alarm on the application of the user terminal 3 as an alarm method, a method for providing an alarm by the robot cleaner 100 itself to call the user's attention may also be selected.

The user terminal 3 transmits data on such setting information to the server through the application (S111), and also transmits, to the robot cleaner 100, data on water supply check period, alarm settings, and mode conversion information through wireless communication.

Next, the robot cleaner 100 may receive a cleaning start command from the application of the user terminal 3 (S112). At this time, the start information from the application of the user terminal 3 may be transmitted to the server 2 and stored in the server 2 (S113).

The robot cleaner 100 controls the drive motor 38 and the pump 34 through the rotary mop controller 160 to start cleaning according to the received cleaning start command (S114).

At this time, the controller 150 of the robot cleaner 100 may read the initial current value of the drive motor 38 that rotates the rotary mop and set the initial value. The robot cleaner 100 may transmit information on the measured initial current value to the server through the communication unit, and the server 2 may store the transmitted information.

The controller 150 proceeds with traveling and cleaning while rotating the rotary mop by transmitting a control signal to the rotary mop controller 160. The rotary mop may also perform wet cleaning in a state in which predetermined percentage of water content is included by water injection from the nozzle with the driving of the pump 34.

At this time, the controller 150 may adjust cleaning intensity and perform traveling by controlling the rotation direction and rotation speed of the rotary mop 80, and proceed with cleaning while traveling in a predetermined mode depending on the cleaning region.

The controller 150 controls the rotary mop controller 160 to transmit the output current of the drive motor 38 of the rotary mop 80 every predetermined period. The rotary mop controller 160 may read the output current of the drive motor 38 and periodically transmit it to the controller 150, and may supply power to the drive motor 38 to drive the drive motor 38.

At this time, the controller 150 periodically receives the detection signal from the water level sensors 320 and 330 of the water tank 32, analyzes the detection signal, and reads the change in the water level (S115).

The controller 150 determines a water supply state based on the analyzed change in the water level and the output current of the drive motor 38, and performs a mode change accordingly (S116).

The controller 150 may analyze the output current of the drive motor 38 received for each period to calculate the percentage of water content of the current cleaning cloth 90, and when the percentage of water content of the current cleaning cloth 90 is less than the threshold, may determine whether the percentage of water content has decreased by comparing the percentage of water content with that of the previous period.

At this time, when the percentage of water content is decreased, it is determined that there is an abnormal operation of the nozzle or water shortage in the water tank 32, and thus it is determined that there is an abnormality in water supply.

On the other hand, when the water level is less than the threshold value by detection information from the water level sensors 320 and 330 of the water tank 32, it is determined that the water supply cannot proceed smoothly any more and thus it is determined that the water supply is abnormal.

When it is determined that there is an abnormality in water supply, the controller reads the setting value from the user terminal 3 and determines whether it is a setting value for automatically changing the mode when there is an abnormality in water supply, or a selection value for returning to the station (S117).

When the user terminal 3 has set the automatic mode change, the mode is changed from the wet mop mode to the dry mop mode according to the setting value, and cleaning continues.

At this time, in the dry mop mode, the rotary mop 80 rotates while traveling in a state in which water is not supplied to the cleaning cloth 90 without driving the nozzle to proceed with cleaning.

On the other hand, when the setting value indicates return, the robot cleaner returns to the station.

When the read output current and the detected information of water level sensors 320 and 330 indicate the abnormality in water supply, the controller 150 alarms the abnormality in water supply of the robot cleaner 100 or contamination of the water tank 32 to the application of the user terminal 3 (S118).

The alarm may include both sound and video information, and may be periodically made.

The controller 150 may receive alarm confirmation information from the user terminal 3 (S119), and may stop the operation of the pump 34 to maintain the cleaning operation in the dry mop mode with the water spraying motion of the nozzle stopped or to perform a return to the station (S120).

In this way, by periodically receiving the detection signal of each sensor from the rotary mop controller 160 for controlling the drive motor 38 and reflecting it together with the output current value of the drive motor 38, the alarm may be made for the abnormality in water supply including current water shortage in the water tank.

The robot system according to the present embodiment may have the configuration as shown in FIG. 1, and when the robot cleaner 100 performing the operation as shown in FIG. 8 is present in the robot system, the robot cleaner may be linked with the server and the user terminal 3 and provide the alarm for the abnormality in water supply by using the output current value of the drive motor 38.

At this time, the alarm for the abnormality in water supply may be blinked periodically in the form of a flicker to draw the user's attention.

The application of the user terminal 3 can induce the user to replenish water and check the nozzle driving of the robot cleaner 100 together with the alarm for the abnormality in water supply.

The alarm may include both sound and video information, and may be periodically made.

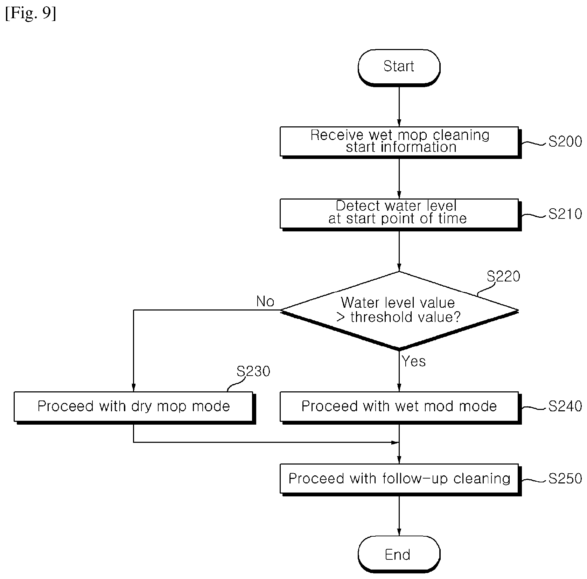

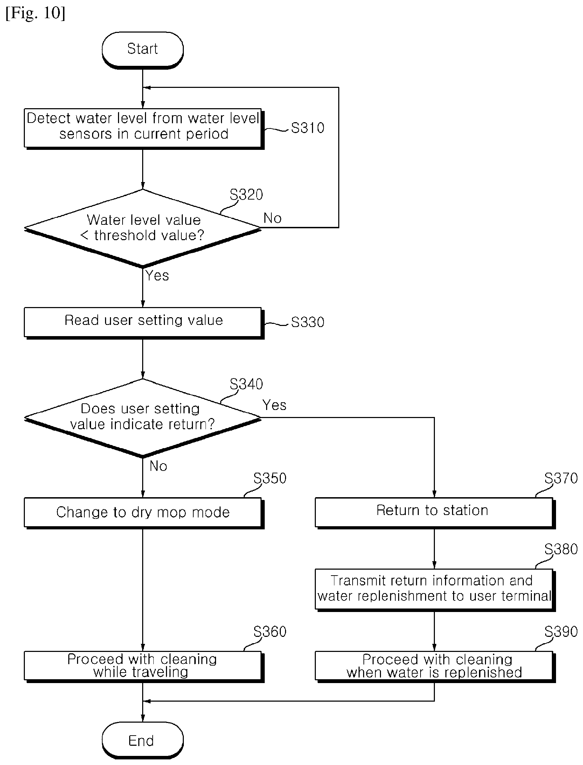

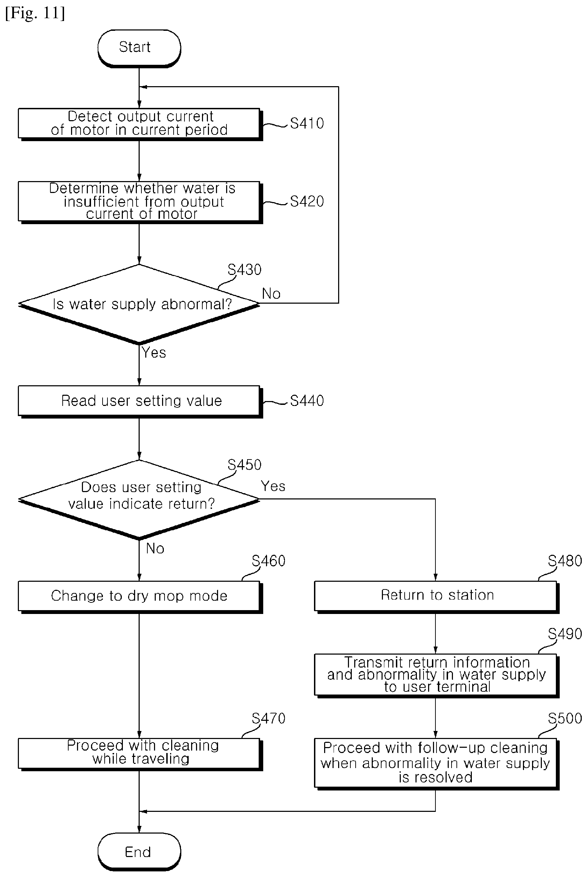

FIG. 9 is a flowchart showing a control method when starting cleaning by the robot cleaner 100 according to an embodiment of the present disclosure, FIG. 10 is a flowchart showing a control method by the water level sensors in FIG. 8, and FIG. 11 is a flowchart showing a control method by using the output current value of the drive motor in FIG. 8.

First, referring to FIG. 9, the rotary mop controller 160 drives the pump 34 and the nozzle to supply water to the rotary mop 80 according to a start signal from the controller 150 (S200).

At this time, the rotary mop controller 160 initially reads detection signal from the water level sensors 320 and 330 disposed in the water tank 32 (S210).

When analyzing the detection signal which is read initially, it is determined whether the water level value from the detection signal of the water level sensors 320 and 330 is equal to or greater than the threshold value (S220).

That is, when cleaning is started in the wet mop mode by the cleaning start command, determination is made in advance as to whether cleaning is possible in the wet mop mode by detecting the water level of the water tank 32 at the start point of time.

At this time, the threshold value may be defined as the amount of water that allows the robot cleaner 100 to clean a cleaning region of a predetermined area once, when the water level value is equal to or greater than the threshold value, the wet mop mode is proceeded with according to the user's start command (S240), and by periodically determining the water level value from the water level sensors 320 and 330, determination is made as to whether the wet mop mode is to be maintained, and subsequent cleaning is proceeded with (S250).

Meanwhile, when the water level value is equal to or less than the threshold value, the setting value of the user terminal 3 is read, and it is determined whether the setting value indicates mode automatic conversion or stop.

When the setting value indicates the mode automatic conversion, the cleaning is proceeded with in the dry mop mode by switching to the dry mop mode, which is transmitted to the user terminal 3 (S230).

At this time, when the setting value of the user terminal 3 indicates stop/return, the robot cleaner has not yet left the station at the start point of time, and thus, without moving, alarms the user terminal 3 to induce water replenishment.

Hereinafter, a method for automatically converting a mode according to determination of an abnormality in water supply by the controller 150 during subsequent cleaning will be described with reference to FIGS. 10 and 11.

Referring to FIG. 10, the controller 150 reads detection signal from water level sensors disposed in the water tank 32 in the current period (S310).

Next, the controller 150 determines whether the water level value from the detection signal of the water level sensors 320 and 330 is equal to or greater than the threshold value (S320).

At this time, the threshold value may be defined as the amount of water that allows the robot cleaner 100 to clean a cleaning region of a predetermined area once, and when the water level value is equal to or greater than the threshold value, the wet mop mode continuously is proceeded with according to the user's start command.

Meanwhile, when the water level value is less than the threshold value, the setting value of the user terminal 3 is read, and it is determined whether the setting value indicates mode automatic conversion or return (S330).

When the setting value indicates the mode automatic conversion, the water supply to the rotary mop 80 is stopped by stopping the nozzle and switching to the dry mop mode (S350).

Therefore, the cleaning is proceeded with in the dry mop mode while rotating the rotary mop 80 in the state in which the water supply is stopped, which is transmitted to the user terminal 3 (S360).

When the setting value of the user terminal 3 indicates return, the return to the station is performed (S370), and when the return is complete, the return completion is transmitted to the user terminal 3, and water replenishment is induced through the alarm to the user terminal 3 (S380).

Then, when the user replenishes water in the water tank 32, the water level is read and the wet mop cleaning is proceeded with again (S390).

As described above, when the robot cleaner 100 determines that cleaning in the wet mod mode is not possible by periodically detecting the current water level of the water tank 32, the robot cleaner 100 may automatically proceed with cleaning in the dry mod mode according to user settings, even if the user orders cleaning process in the wet mod mode.

Therefore, it is possible to reduce unnecessary driving of nozzles while continuously proceeding with cleaning, store location information of the point to switch to the dry mop mode, and proceed with the wet mop mode from that point during subsequent cleaning.

Meanwhile, the robot cleaner 100 may determine whether it is possible to proceed in the dry mop mode.

That is, in addition to the case where the water level of the water tank 32 is lower than the threshold value, when a water supply abnormality occurs due to a driving error of the nozzle or the like, water supply to the cleaning cloth 90 is not smooth and the percentage of water content is lowered.

In this case, when the cleaning cloth 90 is rotated, a large torque is applied, and thus the output current of the drive motor 38 increases.

Therefore, as shown in FIG. 11, the controller 150 may periodically sense the output current of the drive motor 38 and determine whether the water supply is abnormal accordingly (S410).

That is, the controller 150 may read the correlation between the output current of the drive motor 38 stored in the storage 130 and the percentage of water content and read the output current value of the current period, and may determine whether the current percentage of water content is equal to or less than a predetermined value (S420).

As described above, when the current percentage of water content is less than or equal to a predetermined value, it may be additionally determined whether the corresponding percentage of water content is lower than that of the previous period.

As described above, when the percentage of water content is lower than that of the previous period and is less than the predetermined value, it is determined that the cleaning cloth 90 has insufficient water and the water supply is abnormal (S430).

When it is determined that the water supply is abnormal, the setting value of the user terminal 3 is read, and it is determined whether the setting value indicates mode automatic conversion or return (S440).

When the setting value indicates the mode automatic conversion, the water supply to the rotary mop 80 is stopped by stopping the nozzle and switching to the dry mop mode (S430).

Therefore, the cleaning is proceeded with in the dry mop mode while rotating the rotary mop 80 in the state in which the water supply is stopped, which is transmitted to the user terminal 3 (S470).

When the setting value of the user terminal 3 indicates return, the return to the station is performed (S470), and when the return is complete, the return completion is transmitted to the user terminal 3, and water supply abnormality information is transmitted the user terminal 3 through an alarm (S490).

At this time, the controller 150 determines the water level value from the water level sensors 320 and 330 together, and when the water level value is equal to or greater than the threshold value, it may be determined that the abnormality in water supply is caused by a nozzle driving abnormality and when the water level value is less than the threshold value, it may be determined that the abnormality in water supply is caused by water shortage.

The controller 150 may distinguish whether the specific cause of the water supply abnormality is a nozzle driving abnormality or water shortage and guide it to the user terminal 3, and when the water supply abnormality is resolved from the user, proceeds with the mop cleaning again (S500).

As described above, when the robot cleaner 100 determines that cleaning in the wet mod mode is not possible by periodically detecting the current water level of the water tank 32, or by determine the percentage of water content by sensing the output current of the drive motor 38, the robot cleaner 100 may automatically proceed with cleaning in the dry mod mode according to user settings, even if the user orders cleaning process in the wet mod mode.

In the above, it will be apparent that, although the preferred embodiments of the present disclosure have been illustrated and described above, the present disclosure is not limited to the above-described specific embodiments, and various modifications can be made by those skilled in the art without departing from the gist of the present disclosure as claimed in the appended claims. The modifications should not be understood separately from the technical spirit or prospect of the present disclosure.

## Claims

1. A robot cleaner (100) comprising:
a main body (10) forming an outer shape;
a water tank (32) including a water level sensor and configured to store water;
a pair of rotary mops (80) to which a cleaning cloth is attached, and that is configured to move the main body (10) while rotating in contact with a floor;
a drive motor (38) configured to rotate the pair of rotary mops;
a nozzle configured to supply water from the water tank (32) to the cleaning cloth of the rotary mop; and
a controller (150) configured to periodically determine an abnormality in water supply to convert to a wet mop mode or to a dry mop mode to proceed with cleaning, and
wherein the controller (150) is further configured to calculate a percentage of water content of the cleaning cloth from the output current of the drive motor (38), and to determine that the water supply is abnormal, when the percentage of water content is equal to or less than a predetermined value, and to further determine whether the specific cause of the water supply abnormality is a nozzle driving abnormality or water shortage based on a water level value from the water level sensor.

2. The robot cleaner (100) of claim 1, wherein the controller (150) is configured to stop driving of the nozzle to operate in the dry mop mode.

3. The robot cleaner (100) of claim 1, wherein the water tank (32) has the water level sensor for detecting a level of water in the water tank (32) disposed on a wall surface.

4. The robot cleaner (100) of claim 1, wherein the controller (150) is configured to periodically receive a detection signal from the water level sensor, and to determine whether water is insufficient according to the detection signal to perform switching to the wet mop mode or the dry mop mode.

5. The robot cleaner (100) of claim 1, wherein the controller (150) is configured to determine whether to automatically switch from the wet mop mode to the dry mop mode when water supply is abnormal according to a setting value.

6. The robot cleaner (100) of claim 5, wherein the controller (150) is configured to switch from the wet mop mode to the dry mop mode according to the setting value, when a water level value from the detection signal of the water level sensor is equal to or less than a threshold value.

7. The robot cleaner (100) of claim 5, wherein the robot cleaner (100) is configured to stop the wet mop mode and to return to a station according to the setting value when a water level value from the detection signal of the water level sensor is equal to or less than a threshold value.

8. The robot cleaner (100) of claim 5, wherein the controller (150) is configured to read a percentage of water content of a previous period when the percentage of water content is equal to or less than a predetermined value, and to determine that the water supply is abnormal when the percentage of water content of a current period is less than the percentage of water content of the previous period.

9. The robot cleaner (100) of claim 8, wherein the controller (150) is configured to switch from the wet mop mode to the dry mop mode according to the setting value when it is determined that the water supply is abnormal.

10. The robot cleaner (100) of claim 9, wherein the water level sensor includes:
a light emitter provided on an outer wall of the water tank (32); and
a light receiver facing the light emitter and provided on the outer wall of the water tank (32).

11. The robot cleaner (100) of claim 1, wherein the controller (150) is configured to read a water level value of the water tank (32) before moving and to determine whether to operate in the wet mop mode, when receiving cleaning start information.

12. A robot system comprising:
a robot cleaner (100) for performing wet cleaning in a cleaning area;
a server (2) configured to transmit and to receive to and from the robot cleaner (100) to perform control of the robot cleaner (100); and
a user terminal (3) that is linked to the robot cleaner (100) and the server (2) and configured to activate an application for control of the robot cleaner (100) to perform control of the robot cleaner (100),
wherein the robot cleaner (100) includes:
a main body (10) forming an outer shape;
a water tank (32) including a water level sensor and configured to store water;
a pair of rotary mops (80) to which a cleaning cloth is attached, and that is configured to move the main body (10) while rotating in contact with a floor;
a drive motor (38) configured to rotate the pair of rotary mops (80);
a nozzle configured to supply water from the water tank (32) to the cleaning cloth of the rotary mop; and
a controller (150) configured to periodically determine an abnormality in water supply to convert to a wet mop mode or to a dry mop mode to proceed with cleaning, and
wherein the controller (150) is further configured to calculate a percentage of water content of the cleaning cloth from the output current of the drive motor (38), and to determine that the water supply is abnormal, when the percentage of water content is equal to or less than a predetermined value, and to further determine whether the specific cause of the water supply abnormality is a nozzle driving abnormality or water shortage based on a water level value from the water level sensor.

13. The robot system of claim 12, wherein the water tank (32) includes the water level sensor for detecting a level of water in the water tank on a wall surface, and the controller (150) is configured to periodically receive a detection signal from the water level sensor, and to determine whether water is insufficient according to the detection signal to perform switching to the wet mop mode or the dry mop mode.

14. The robot system of claim 12, wherein a setting value for mode switching is received from the user terminal (2), and
wherein the robot cleaner (100) is configured to switch from the wet mop mode to the dry mop mode, or to stop the wet mop mode and to return to a station, according to the setting value, when a water level value from the detection signal of the water level sensor is equal to or less than a threshold value.

## Patentansprüche

1. Reinigungsroboter (100), umfassend:
einen Hauptkörper (10), der eine äußere Form bildet;
einen Wassertank (32), der einen Wasserstandssensor umfasst und dazu ausgelegt ist, Wasser zu speichern;
ein Paar rotierender Wischmopps (80), an denen jeweils ein Reinigungstuch befestigt ist und die dazu ausgelegt sind, den Hauptkörper (10) zu bewegen, während sie sich in Kontakt mit einem Boden drehend bewegen;
einen Antriebsmotor (38), der dazu ausgelegt ist, das Paar rotierender Wischmopps anzutreiben;
eine Düse, die dazu ausgelegt ist, das Reinigungstuch des rotierenden Wischmopps aus dem Wassertank (32) mit Wasser zu versorgen; und
eine Steuervorrichtung (150), die dazu ausgelegt ist, periodisch eine Abnormalität in der Wasserversorgung zu bestimmen, um in einen Nasswischmodus oder einen Trockenwischmodus zu wechseln, um die Reinigung fortzusetzen,
wobei die Steuervorrichtung (150) ferner dazu ausgelegt ist, einen Wassergehaltsprozentsatz des Reinigungstuchs aus dem Ausgangsstrom des Antriebsmotors (38) zu berechnen und zu bestimmen, dass die Wasserversorgung abnormal ist, wenn der Wassergehaltsprozentsatz gleich oder kleiner als ein vorbestimmter Wert ist, und ferner zu bestimmen, ob die spezifische Ursache der Abnormalität der Wasserversorgung eine Düsenbetriebsanomalie oder ein Wassermangel ist, auf der Grundlage eines Wasserstandswerts, der vom Wasserstandssensor stammt.

2. Reinigungsroboter (100) nach Anspruch 1, wobei die Steuervorrichtung (150) dazu ausgelegt ist, den Betrieb der Düse für deren Betrieb im Trockenwischmodus zu stoppen.

3. Reinigungsroboter (100) nach Anspruch 1, wobei der Wassertank (32) den Wasserstandssensor aufweist, der dazu dient, einen Wasserstand im Wassertank (32) zu detektieren, wobei der Wasserstandssensor an einer Wandoberfläche angeordnet ist.

4. Reinigungsroboter (100) nach Anspruch 1, wobei die Steuervorrichtung (150) dazu ausgelegt ist, periodisch ein Detektionssignal des Wasserstandssensors zu empfangen und auf Grundlage des Detektionssignals zu bestimmen, ob der Wasserstand unzureichend ist, um eine Umschaltung in den Nasswischmodus oder den Trockenwischmodus durchzuführen.

5. Reinigungsroboter (100) nach Anspruch 1, wobei die Steuervorrichtung (150) dazu ausgelegt ist, zu bestimmen, ob bei einer abnormal festgestellten Wasserversorgung gemäß einem Einstellwert vom Nasswischmodus in den Trockenwischmodus umzuschalten ist.

6. Reinigungsroboter (100) nach Anspruch 5, wobei die Steuervorrichtung (150) dazu ausgelegt ist, gemäß dem Einstellwert vom Nasswischmodus in den Trockenwischmodus umzuschalten, wenn ein Wasserstandswert aus dem Detektionssignal des Wasserstandssensors gleich oder kleiner als ein Schwellenwert ist.

7. Reinigungsroboter (100) nach Anspruch 5, wobei der Reinigungsroboter (100) dazu ausgelegt ist, den Nasswischmodus zu stoppen und gemäß dem Einstellwert zu einer Station zurückzukehren, wenn ein Wasserstandswert aus dem Detektionssignal des Wasserstandssensors gleich oder kleiner als ein Schwellenwert ist.

8. Reinigungsroboter (100) nach Anspruch 5, wobei die Steuervorrichtung (150) dazu ausgelegt ist, einen Wassergehaltsprozentsatz einer vorherigen Periode zu lesen, wenn der Wassergehaltsprozentsatz gleich oder kleiner als ein vorbestimmter Wert ist, und zu bestimmen, dass die Wasserversorgung abnromal ist, wenn der Wassergehaltsprozentsatz einer aktuellen Periode kleiner ist als der Wassergehaltsprozentsatz der vorherigen Periode.

9. Reinigungsroboter (100) nach Anspruch 8, wobei die Steuervorrichtung (150) dazu ausgelegt ist, gemäß dem Einstellwert vom Nasswischmodus in den Trockenwischmodus umzuschalten, wenn bestimmt wird, dass die Wasserversorgung abnormal ist.

10. Reinigungsroboter (100) nach Anspruch 9, wobei der Wasserstandssensor umfasst:
einen Lichtsender, der an einer Außenwand des Wassertanks (32) angeordnet ist; und
einen Lichtempfänger, der dem Lichtsender gegenüberliegt und an der Außenwand des Wassertanks (32) angeordnet ist.

11. Reinigungsroboter (100) nach Anspruch 1, wobei die Steuervorrichtung (150) dazu ausgelegt ist, vor einer Bewegung einen Wasserstandswert des Wassertanks (32) zu lesen und bei Empfang von Informationen über den Beginn der Reinigung zu bestimmen, ob im Nasswischmodus betrieben werden soll.

12. Robotersystem, umfassend:
einen Reinigungsroboter (100), der dazu ausgelegt ist, eine Nassreinigung in einem Reinigungsbereich durchzuführen;
einen Server (2), der dazu ausgelegt ist, Daten an den Reinigungsroboter (100) zu übertragen und von diesem zu empfangen, um eine Steuerung des Reinigungsroboters (100) durchzuführen; und
ein Benutzerendgerät (3), das mit dem Reinigungsroboter (100) und dem Server (2) verbunden ist und dazu ausgelegt ist, eine Anwendung zur Steuerung des Reinigungsroboters (100) zu aktivieren,
wobei der Reinigungsroboter (100) umfasst:
einen Hauptkörper (10), der eine äußere Form bildet;
einen Wassertank (32), der einen Wasserstandssensor umfasst und dazu ausgelegt ist, Wasser zu speichern;
ein Paar rotierender Wischmopps (80), an denen jeweils ein Reinigungstuch befestigt ist und die dazu ausgelegt sind, den Hauptkörper (10) zu bewegen, während sie sich in Kontakt mit einem Boden drehend bewegen;
einen Antriebsmotor (38), der dazu ausgelegt ist, das Paar rotierender Wischmopps (80) anzutreiben;
eine Düse, die dazu ausgelegt ist, das Reinigungstuch des rotierenden Wischmopps aus dem Wassertank (32) mit Wasser zu versorgen; und
eine Steuervorrichtung (150), die dazu ausgelegt ist, periodisch eine Abnormalität der Wasserversorgung zu bestimmen, um in einen Nasswischmodus oder einen Trockenwischmodus zu wechseln, um die Reinigung fortzusetzen,
wobei die Steuervorrichtung (150) ferner dazu ausgelegt ist, einen Wassergehaltsprozentsatz des Reinigungstuchs aus dem Ausgangsstrom zum Antriebsmotor (38) zu berechnen und zu bestimmen, dass die Wasserversorgung abnormal ist, wenn der Wassergehaltsprozentsatz gleich oder kleiner als ein vorbestimmter Wert ist, und ferner zu bestimmen, ob die spezifische Ursache der Abnormalität der Wasserversorgung eine Düsenbetriebsanomalie oder ein Wassermangel ist, auf der Grundlage eines Wasserstandswerts, der vom Wasserstandssensor stammt.

13. Robotersystem nach Anspruch 12, wobei der Wassertank (32) den Wasserstandssensor umfasst, der dazu dient, einen Wasserstand im Wassertank an einer Wandoberfläche zu detektieren, und wobei die Steuervorrichtung (150) dazu ausgelegt ist, periodisch ein Detektionssignal des Wasserstandssensors zu empfangen und auf Grundlage des Detektionssignals zu bestimmen, ob der Wasserstand unzureichend ist, um eine Umschaltung in den Nasswischmodus oder den Trockenwischmodus durchzuführen.

14. Robotersystem nach Anspruch 12, wobei ein Einstellwert für die Modusumschaltung vom Benutzerendgerät (2) empfangen wird, und wobei der Reinigungsroboter (100) dazu ausgelegt ist, gemäß dem Einstellwert vom Nasswischmodus in den Trockenwischmodus umzuschalten oder den Nasswischmodus zu stoppen und zu einer Station zurückzukehren, wenn ein Wasserstandswert aus dem Detektionssignal des Wasserstandssensors gleich oder kleiner als ein Schwellenwert ist.

## Revendications

1. Robot de nettoyage (100) comprenant :
un corps principal (10) formant une forme externe ;
un réservoir d'eau (32) incluant un capteur de niveau d'eau et conçu pour stocker de l'eau ;
une paire de serpillères tournantes (80) auxquelles un chiffon de nettoyage est fixé, et qui est conçue pour déplacer le corps principal (10) tout en tournant en contact avec un sol ;
un moteur d'entraînement (38) conçu pour faire tourner la paire de serpillères tournantes ;
une buse conçue pour alimenter en eau le chiffon de nettoyage de la serpillère tournante depuis le réservoir d'eau (32) ; et
un dispositif de commande (150) conçu pour déterminer périodiquement une anomalie dans l'alimentation en eau pour passer à un mode de serpillère humide ou à un mode de serpillère sèche pour poursuivre le nettoyage, et
dans lequel le dispositif de commande (150) est en outre conçu pour calculer un pourcentage de teneur en eau du chiffon de nettoyage à partir du courant de sortie du moteur d'entraînement (38), et pour déterminer que l'alimentation en eau est anormale, lorsque le pourcentage de teneur en eau est égal ou inférieur à une valeur prédéterminée, et pour déterminer en outre si oui ou non la cause spécifique de l'anomalie d'alimentation en eau est une anomalie d'entraînement de buse ou un manque d'eau sur la base d'une valeur de niveau d'eau provenant du capteur de niveau d'eau.

2. Robot de nettoyage (100) selon la revendication 1, dans lequel le dispositif de commande (150) est conçu pour arrêter l'entraînement de la buse pour son fonctionnement dans le mode de serpillère sèche.

3. Robot de nettoyage (100) selon la revendication 1, dans lequel le réservoir d'eau (32) présente le capteur de niveau d'eau permettant de détecter un niveau d'eau dans le réservoir d'eau (32) disposé sur une surface de paroi.

4. Robot de nettoyage (100) selon la revendication 1, dans lequel le dispositif de commande (150) est conçu pour recevoir périodiquement un signal de détection du capteur de niveau d'eau, et pour déterminer si oui ou non le niveau d'eau est insuffisant selon le signal de détection pour réaliser une commutation vers le mode de serpillère humide ou le mode de serpillère sèche.

5. Robot de nettoyage (100) selon la revendication 1, dans lequel le dispositif de commande (150) est conçu pour déterminer si oui ou non il convient de commuter du mode de serpillère humide au mode de serpillère sèche lorsque l'alimentation en eau est anormale selon une valeur de réglage.

6. Robot de nettoyage (100) selon la revendication 5, dans lequel le dispositif de commande (150) est conçu pour passer du mode de serpillère humide au mode de serpillère sèche selon la valeur de réglage, lorsqu'une valeur de niveau d'eau provenant du signal de détection du capteur de niveau d'eau est égale ou inférieure à une valeur seuil.

7. Robot de nettoyage (100) selon la revendication 5, dans lequel le robot de nettoyage (100) est conçu pour arrêter le mode de serpillère humide et retourner vers une station selon la valeur de réglage lorsqu'une valeur de niveau d'eau provenant du signal de détection du capteur de niveau d'eau est égale ou inférieure à une valeur seuil.

8. Robot de nettoyage (100) selon la revendication 5, dans lequel le dispositif de commande (150) est conçu pour lire un pourcentage de teneur en eau d'une période précédente lorsque le pourcentage de teneur en eau est égal ou inférieur à une valeur prédéterminée, et pour déterminer que l'alimentation en eau est anormale lorsque le pourcentage de teneur en eau d'une période actuelle est inférieur au pourcentage de teneur en eau de la période précédente.

9. Robot de nettoyage (100) selon la revendication 8, dans lequel le dispositif de commande (150) est conçu pour commuter du mode de serpillère humide au mode de serpillère sèche selon la valeur de réglage lorsqu'il est déterminé que l'alimentation en eau est anormale.

10. Robot de nettoyage (100) selon la revendication 9, dans lequel le capteur de niveau d'eau inclut :
un émetteur de lumière disposé sur une paroi externe du réservoir d'eau (32) ; et
un récepteur de lumière faisant face à l'émetteur de lumière et disposé sur la paroi externe du réservoir d'eau (32).

11. Robot de nettoyage (100) selon la revendication 1, dans lequel le dispositif de commande (150) est conçu pour lire une valeur de niveau d'eau du réservoir d'eau (32) avant le déplacement et pour déterminer si oui ou non il convient de fonctionner dans le mode de serpillère humide, lors de la réception d'informations de début de nettoyage.

12. Système de robot comprenant :
un robot de nettoyage (100) permettant de réaliser un nettoyage humide dans une zone de nettoyage ;
un serveur (2) conçu pour une transmission au et pour une réception du robot de nettoyage (100) pour réaliser une commande du robot de nettoyage (100) ; et
un terminal utilisateur (3) qui est lié au robot de nettoyage (100) et au serveur (2) et conçu pour activer une application pour la commande du robot de nettoyage (100) pour réaliser une commande du robot de nettoyage (100),
dans lequel le robot de nettoyage (100) inclut :
un corps principal (10) formant une forme externe ;
un réservoir d'eau (32) incluant un capteur de niveau d'eau et conçu pour stocker de l'eau ;
une paire de serpillères tournantes (80) auxquelles un chiffon de nettoyage est fixé, et qui est conçue pour déplacer le corps principal (10) tout en tournant en contact avec un sol ;
un moteur d'entraînement (38) conçu pour faire tourner la paire de serpillères tournantes (80) ;
une buse conçue pour alimenter en eau le chiffon de nettoyage de la serpillère tournante depuis le réservoir d'eau (32) ; et
un dispositif de commande (150) conçu pour déterminer périodiquement une anomalie d'alimentation en eau pour passer à un mode de serpillère humide ou à un mode de serpillère sèche pour poursuivre le nettoyage, et
dans lequel le dispositif de commande (150) est conçu en outre pour calculer un pourcentage de teneur en eau du chiffon de nettoyage du courant de sortie au moteur d'entraînement (38), et pour déterminer que l'alimentation en eau est anormale, lorsque le pourcentage de teneur en eau est égal ou inférieur à une valeur prédéterminée, et pour déterminer en outre si oui ou non la cause spécifique de l'anomalie d'alimentation en eau est une anomalie d'entraînement de buse ou un manque d'eau sur la base d'une valeur de niveau d'eau provenant du capteur de niveau d'eau.

13. Système de robot selon la revendication 12, dans lequel le réservoir d'eau (32) inclut le capteur de niveau d'eau permettant de détecter un niveau d'eau dans le réservoir d'eau sur une surface de paroi, et le dispositif de commande (150) est conçu pour recevoir périodiquement un signal de détection du capteur de niveau d'eau, et pour déterminer si oui ou non un niveau d'eau est insuffisant selon le signal de détection pour réaliser une commutation vers le mode de serpillère humide ou le mode de serpillère sèche.

14. Système de robot selon la revendication 12, dans lequel une valeur de réglage pour la commutation de mode est reçue du terminal utilisateur (2), et
dans lequel le robot de nettoyage (100) est conçu pour commuter du mode de serpillère humide au mode de serpillère sèche, ou pour arrêter le mode de serpillère humide et retourner vers une station, selon la valeur de réglage, lorsqu'une valeur de niveau d'eau provenant du signal de détection du capteur de niveau d'eau est égale ou inférieure à une valeur seuil.
